Europäisches Patentamt

European Patent Office

Office européen des brevets

(19)

(11) Veröffentlichungsnummer: **0 272 640 B1**

(12) **EUROPÄISCHE PATENTSCHRIFT**

(45) Veröffentlichungstag der Patentschrift: **02.09.92**

(51) Int. Cl.5: **B23H 7/16**, B23H 7/26

(21) Anmeldenummer: **87118781.1**

(22) Anmeldetag: **17.12.87**

(54) Verfahren und Vorrichtung zum Spülen der Erodierzone beim elektroerosiven Senken.

(30) Priorität: **22.12.86 DE 3644042**

(43) Veröffentlichungstag der Anmeldung:
**29.06.88 Patentblatt 88/26**

(45) Bekanntmachung des Hinweises auf die
Patenterteilung:
**02.09.92 Patentblatt 92/36**

(84) Benannte Vertragsstaaten:
**CH DE FR GB IT LI LU SE**

(56) Entgegenhaltungen:
**EP-A- 0 065 677**
**DE-A- 2 313 263**
**DE-B- 2 734 682**
**JP-A- 5 969 220**

(73) Patentinhaber: **AG für industrielle Elektronik
AGIE Losone bei Locarno**

**CH-6616 Losone/Locarno(CH)**

(72) Erfinder: **Levy, Gideon, Dr.**
**Via Vignole 33**
**CH-6644 Orselina(CH)**
Erfinder: **Boccadoro, Marco**
**Brogirolo**
**CH-6653 Verscio(CH)**
Erfinder: **Magginetti, Silvano**
**Via alle Vigne 38**
**CH-6604 Locarno(CH)**
Erfinder: **Libotte, Claudio**

**CH-6925 Gentilino(CH)**

(74) Vertreter: **EGLI-EUROPEAN PATENT ATTOR-
NEYS**
**Widenmayerstrasse 5**
**W-8000 München 22(DE)**

EP 0 272 640 B1

## Beschreibung

Die Erfindung bezieht sich auf ein Verfahren zum Spülen der Erodierzone beim elektroerosiven Senken, bei welchem im Dielektrikum Hub-/Senk-Bewegungen der Werkzeugelektrode relativ zum Werkstück nach einem sich periodisch wiederholenden Grundmuster durchgeführt werden.

Die Erfindung bezieht sich auch auf eine Vorrichtung zum Spülen der Erodierzone in einer elektroerosiven Senkanlage mit einer Hub-/Senk-Einrichtung und einer Timer-Einrichtung zum Bewirken eines periodisch sich wiederholenden Grundmusters von Hub-/Senk-Bewegungen der Werkzeugelektrode relativ zum Werkstück im Dielektrium.

Die vorgenannten Hub-/Senk-Bewegungen, auch Timerbewegungen genannt, üben im Dielektrikum, beispielsweise einem Öl, einen Pumpeffekt aus, welcher zur Spülung, insbesondere zur Reinigung der Erodierzone herangezogen wird.

Bei der Senkerosionsbearbeitung wird üblicherweise wie folgt vorgegangen:
Ausgehend von den Gegebenheiten der Erosionsanlage, z. B. der vorhandenen Spüleinrichtung, der verwendeten Elektrode und dem zu bearbeitenden Werkstück, sowie von den angestrebten Arbeitszielen, z.B. der gewünschten Soll-Geometrie, der Soll-Oberflächengüte, der Abtragsintensität, der Verschleißarmut, etc., werden anhand vorhandener technologischer Richtlinien die geometrischen ($\triangle$ R, $\triangle$ $\beta$, $\triangle$ Z, $\triangle$ X, $\triangle$ Y) und die verfahrensspezifischen (U, I, T, Q usw.) Parameter, auch Off-Line-Parameter genannt, bestimmt. Hierbei bedeuten:

$\triangle$ R:  radialer Vorschubschritt (z.B. zum schritt weisen Erweitern)
$\triangle$ $\beta$:  Winkelinkrement bei sternförmiger Arbeitsbewegung
$\triangle$ Z:  Z-Achseninkrement
$\triangle$ X:  X-Achseninkrement
$\triangle$ Y:  Y-Achseninkrement
U :  Leerlaufspannung
I :  Stromstärke
T :  Impulslänge
Q :  Spülmenge.

Sind die genannten Off-Line-Parameter sorgfältig ausgewählt, kann der Erosionsprozeß gestartet werden. Der ablaufende Erosionsprozeß läßt sich beispielsweise durch pulsspezifische physikalische Parameter, wie die Zündverzögerungszeit $t_d$, der Kurzschlußanteil $t_c$, usw., c charakterisieren. Diese Parameter können dann durch sog. On-Line-Eingriffe auf die Servoempfindlichkeit $\overset{*}{\eta}$, die Servoreferenzspannung $\underline{U}$ im Spalt, die Erodierzonenspülung $\triangle$ $\dot{Q}$, die Pausendauer $\triangle$ $\overline{T}$ usw. beeinflußt werden.

Die Güte eines elektroerosiven Senkprozesses läßt sich durch die Prozeßeffizienz und die Prozeßstabilität charakterisieren. Die Prozeßeffizienz liefert Informationen über den Wirkungsgrad des physikalischen Prozesses, z.B. Leerlaufanteil, Kurzschlußanteil. Die Prozeßstabilität liefert Informationen über das eigentliche dynamische Verhalten der Bearbeitung, z.B. Pinoleneingriffbewegung usw.

Die Prozeßeffizienz und die Prozeßstabilität werden durch jede Prozeßstörung verringert. Leider begleiten Prozeßstörungen stets den Erosionsprozeß. Sie werden durch den Prozeß selbst hervorgerufen oder ihm von außen aufgeprägt.

In der Regel sind während eines elektroerosiven Senkprozesses Eingriffe nötig, um seinen weiteren Ablauf zu garantieren, beispielsweise dann, wenn sich in der Tiefe der Bearbeitungs- oder Erodierzone ein Lichtbogen auszubilden beginnt. Für derartige Fälle sind bekanntlich Überwachungssysteme, sog. automatische Anti-Kurzschluß-systeme, in einer Elektroerosionsanlage vorgesehen. Bei einer Senkerodieranlage veranlassen diese Systeme im Störfall häufig eine Hub-/Senk-Bewegung oder einfach eine Rückzugsbewegung der Pinole.

Die Hub-/Senk-Bewegungen dienen sozusagen der Sanierung der Arbeitszone und damit der Sicherheit des Arbeitsprozesses.

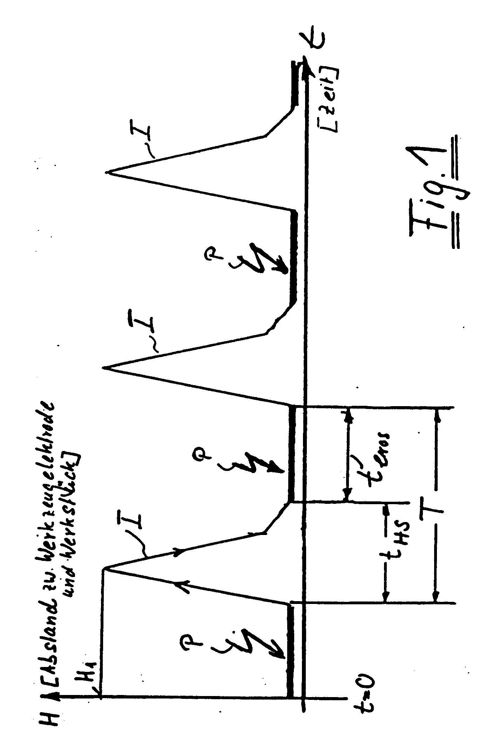

Es ist bereits bekannt, diese Timer-Bewegungen nach einem vorgegebenen Grundmuster auszuführen, also nicht erst im Kurzschlußfall, sondern sozusagen vorsorglich in regelmäßigen Abständen, um Kurzschlüssen so weit wie möglich vorzubeugen (vgl. Fig.1). Hierbei kann der Maschinenoperator den Timer-Bewegungen eine bestimmte Eingriffsfrequenz oder anders ausgedrückt, einen bestimmten gegenseitigen Zeitabstand vorgeben. Die Eingriffsfrequenz hängt in der Regel von den vorgegebenen Off-Line-Parametern ab; aber auch von der Eindringtiefe der Werkzeugelektrode in die Bearbeitungszone. Auch die Hubhöhe der Timer-Bewegungen kann bekanntlich vorgegeben werden.

Darüberhinaus ist es auch bekannt, die Timer Bewegungen an sich ändernde Prozeßbedingungen anzupassen, beispielsweise aus der DE-A 2 313 263 (INOUE), der EP-A 0 065 677 (DECKEL), der DE-B 27 34 682 (CHARMILLES) oder der JP-A 59-69220 (FANUC).

Timer-Bewegungen führen stets zu einer Beeinträchtigung der Prozeßstabilität und Prozeßeffizienz, insbesondere zu einer Verlängerung der Arbeitszeit.

Die Erfindung umfaßt die Aufgabe, die Bearbeitungszeit in einer elektroerosiven Senkanlage zu verkürzen.

In verfahrensmäßiger Hinsicht wird dieses Problem dadurch gelöst, daß bei dem eingangs genannten gattungsgemäßen Verfahren erfindungsgemäß für die Timer-Bewegungen folgendes Grundmuster gewählt wird: zwischen zwei ersten Hub-/Senk-Bewegungen wird/werden eine oder mehrere kurzhubigere zweite Hub-/Senk-Bewegung(en) der Werkzeugelektrode relativ zum Werkstück im Dielektrikum durchgeführt.

In vorrichtungsmäßiger Hinsicht wird diese Aufgabe dadurch gelöst, daß bei der eingangs genannten gattungsgemäßen Vorrichtung die Timer-Einrichtung erfindungsgemäß zweistufig ausgelegt ist, derart, daß sie folgendes Grudmuster erzeugt: zwischen zwei ersten Hub-/Senkbewegungen wird eine vorgegebene Zahl kurzhubigerere zweite Hub-/Senk-Bewegung(en) der Werkzeugelektrode relativ zum Werkstück ausführt.

Die Erfindung geht von der Erkenntnis aus, daß zur Sanierung der Erodierzone durch gute Spülung und Beseitigung lokaler Verschmutzungen kurzhubige Hub-/Senk-Bewegungen ausreichen, falls zwischendurch eine langhubige Hub-/Senk-Bewegung durchgeführt wird. Dabei genügt es, für die langhubige Hub-/Senk-Bewegung diejenige Hubhöhe vorzusehen, die man auch schon bisher für Hub-/Senk-Bewegungen vorgesehen hatte.

Das Zwischenschieben der kurzhubigen Hub-/Senk-Bewegungen zwischen die normalen Hub-/Senk-Bewegungen führt nicht nur zu einer geringeren Totzeit und damit zu einer Erhöhung der Arbeitseffizienz. Es beeinträchtigt auch weit weniger die Prozeßstabilität, als die Vornahme normaler bzw. langhubiger Hub-/Senk-Bewegungen.

Bevorzugt wird das Verfahren derart geführt, daß die Anzahl, die Hubhöhe und/oder die Frequenz der zwischen zwei ersten Hub-/Senk-Bewegungen zwischengeschalteten kurzhubigen zweiten Hub-/Senk-Bewegungen konstant gehalten wird. Hierdurch läßt sich in besonders einfacher Weise die Arbeitszeit verkürzen und der Prozeßablauf überschauen. Besonders einfach läßt sich das erfindungsgemäße Verfahren dadurch realisieren, daß hinsichtlich der Frequenz nicht zwischen ersten und zweiten, also normalen und kurzhubigen Hub-/Senk-Bewegungen unterschieden wird, sondern jede einzelne Hub-/Senk-Bewegung gleichen Zeitabstand von ihrem Vorgänger hat.

Bevorzugt beträgt die Hubhöhe der kurzhubigen Hub-/Senk-Bewegungen ein Zwanzigstel bis drei Viertel, insbesondere ein Zehntel bis einhalb, besonders bevorzugt ein Sechstel bis ein Drittel der Hubhöhe der langhubigen Hub-/Senk-Bewegungen. Hierbei kann von einer mittleren Hubhöhe der langhubigen Hub-/Senk-Bewegungen ausgegangen werden mit der Folge, daß die Hubhöhe der kurzhubigen Hub-/Senk-Bewegungen für die Dauer des gesamten Erosionsprozesses konstant ist. Diese Maßnahme ist vom operativen her relativ einfach durchzuführen, hat aber zur Folge, daß mit zunehmender Eindringtiefe der Werkzeugelektrode in das Werkstück die Frequenz der Timer-Bewegungen erhöht und/oder die Zahl der zwischen zwei langhubigen Timer-Bewegungen geschalteten kurzhubigen Timer-Bewegungen verringert werden muß. Paßt man hingegen die Hubhöhe der kurzhubigen Timer-Bewegungen an die Hubhöhe der langhubigen Timer-Bewegungen an, läßt man also mit zunehmender Eindringtiefe der Werkzeugelektrode in das Werkstück die Hubhöhen beider Timer-Bewegungen anwachsen, kann man unter Umständen ohne Frequenzerhöhung und/oder Reduzierung der Zahl der zwischengeschalteten kurzhubigen Timer-Bewegungen auskommen. Eine Vergrößerung der Hubhöhe der Timer- Bewegungen verbessert nämlich den Spüleffekt und führt somit gerade bei großer Eindringtiefe der Werkzeugelektrode in das Werkstück zu einer guten Spülung der Erodierzone.

Vorzugsweise wird die optimale Timer-Frequenz dadurch ermittelt, daß man den Erosionsprozeß während einer Einstellphase frei laufen läßt, bei einer sich anbahnenden Kurzschluß-Situation jeweils eine Hub-/Senk-Bewegung durchführt und den mittleren Zeitabstand zwischen zwei sich anbahnenden Kurzschluß-Situationen ermittelt. Dieser Zeitabstand wird dann als Periodendauer für die Timer-Bewegung vorgegeben, wobei diese Periodendauer vorzugsweise noch um einen Sicherheitswert reduziert wird, oder mit anderen Worten die Frequenz entsprechend erhöht wird.

Eine selbsttätige Anpassung der Frequenz der Timer-Bewegungen an sich ändernde Prozeßbedingungen führt zu einer weiteren Verkürzung der Arbeitszeit. Eine derartige Anpassung wird vorzugsweise dadurch durchgeführt, daß innerhalb unterschiedlich langer Zählintervalle ermittelt wird, ob und ggf. wieviele Kurzschluß-Situationen sich trotz der bereits bestehenden Timer-Bewegungen angebahnt haben. Haben sich ein oder mehrere Kurzschluß-Situationen während des kurzen Zählintervalles - oder während unmittelbar aufeinanderfolgender kurzer Zählintervalle - angebahnt, wird die vorgegebene Timer-Frequenz erhöht. Haben sich hingegen während des längeren Zählintervalles - oder während mehrerer unmittelbar aufeinanderfolgender längerer Zählintervalle - keine Kurzschluß-Situationen angebahnt, wird die Timer-Frequenz erniedrigt.

Nachstehend wird die Erfindung anhand von Ausführungsbeispielen - auch aus dem Stand der Technik - und der beigefügten Zeichnung näher erläutert.

In der Zeichnung zeigen:

Fig. 1      ein Diagramm des Bewegungsablaufes der Timer-Bewegungen nach dem Stand der Technik;

Fig. 2      ein Diagramm des Bewegungsablaufes der Timer-Bewegungen nach einem Ausführungsbeispiel in der Erfindung; und

Fig. 3      ein Schaltschema eines Ausführungsbeispieles einer Vorrichtung zur Durchführung der in Fig. 2 gezeigten Timer-Bewegungen.

Fig. 1 zeigt den Abstand H zwischen Werkzeugelektrode und Werkstück gegenüber der Zeit t während des Erodierens. Gemäß dieser Fig. wird die Werkzeugelektrode in konstanten Zeitabständen um die Hubhöhe $H_1$ vom Werkstück weggezogen und danach wieder auf einen konstanten Wert an das Werkstück herangeführt. Während dieser Hub-/Senk-Bewegung, im folgenden Timer-Bewegung genannt, findet keine Erosion statt. Das zugehörige Zeitintervall wird mit $t_{HS}$ bezeichnet. Im unmittelbar sich daran anschließenden Zeitintervall $t_{eros}$ findet die eigentliche Erosion statt, was durch den gezackten Pfeil P angedeutet ist. Die Timer-Bewegungen selbst haben das Bezugszeichen I.

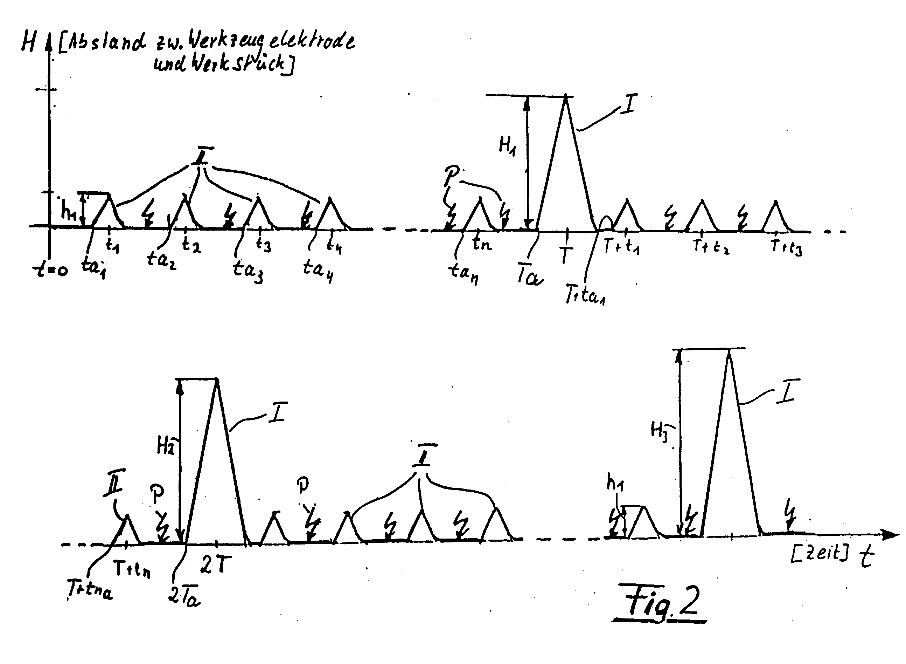

Das in Fig. 2 dargestellte Ausführungsbeispiel der Erfindung unterscheidet sich im wesentlichen vom Stand der Technik dadurch, daß zwischen zwei ersten Timer-Bewegungen I mehrere kurzhubigerere zweite Timer-Bewegungen II durchgeführt werden. Gemäß der Fig. 2 beginnt der Erosionsprozeß zur Zeit t gleich Null. Zu vorgegebenen Zeitpunkten, etwa um $t_1$, $t_2$, $t_3$ ... $t_n$ werden kurzhubige Timer-Bewegungen II der die Werkzeugelektrode 3 halternden Pinole durchgeführt - bei Z-Erosion in Z-Richtung. Im dargestellten Ausführungsbeispiel sei die Zahl n gleich 10 und der zeitliche Abstand zwischen zwei kurzhubigen Timer-Bewegungen konstant, also $t_m - t_{m-1}$ = konstant, mit m = ganze Zahl und $1 \leq m \leq 10$. Die Hubhöhen $h_1$ der kurzhubigen Timer-Bewegungen II betragen ca. 1 mm. Nach der zehnten kurzhubigen Timer-Bewegung II wird die erste langhubige Timer-Bewegung I durchgeführt. Deren Hubhöhe $H_1$ betrage ca. 4,5 mm. Alsdann folgen wieder zehn kurzhubige Timer-Bewegungen II, denen um den Zeitpunkt 2T (= 2 x $t_{n+1}$) wiederum eine langhubige Timer-Bewegung I folgt, deren Hubhöhe grundsätzlich gleich der Hubhöhe der vorausgegangenen langhubigen Timer-Bewegungen I sein kann, in diesem Ausführungsbeispiel also $H_1$. Nach weiteren n kurzhubigen Timer-Bewegungen II erfolgt wiederum eine langhubige Timer-Bewegung I und sofort.

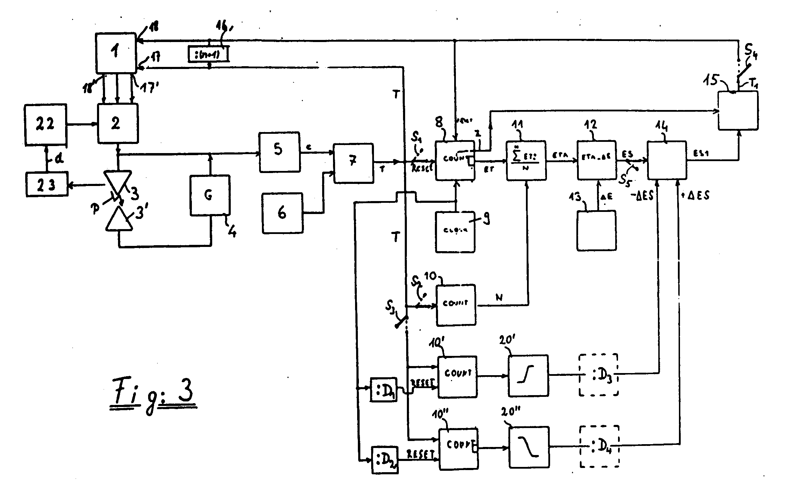

Im dargestellten Ausführungsbeispiel wird die Hubhöhe der langhubigen Timer-Bewegungen I allmählich vergrößert, und zwar in Abhängigkeit von der Eindringtiefe der Werkzeugelektrode 3 in das Werkstück 3' (vgl. Fig 3). Die mit fortschreitender Zeit größer werdende Eindringtiefe der Werkstückelektrode in das Werkstück 3' wird gemäß dem in Fig. 3 dargestellten Ausführungsbeispiel gemessen und sorgt für ein allmähliches Anwachsen der Hubhöhen. Hierauf wird noch näher eingegangen werden. Im dargestellten Ausführungsbeispiel betragen die Hubhöhen $H_1$, $H_2$ und $H_3$ 4,5, 4,55 und 4,6 mm.

Grundsätzlich können auch die kurzhubigen Timer-Bewegungen II mit zunehmender Eindringtiefe anwachsen, beispielsweise in einem festen Verhältnis zur Hubhöhe der ihr vorausgegangenen langhubigen Timer-Bewegungen I.

Selbstverständlich können auch die Anzahl der kurzhubigen Timer-Bewegungen II zwischen zwei langhubigen Timer-Bewegungen I, deren Zeitabstand oder Frequenz, und/oder deren Hub-/Senk-Geschwindigkeit geändert werden.

Insbesondere kann beispielsweise die Anzahl der kurzhubigen Timer-Bewegungen II mit zunehmender Eindringtiefe der Werkzeugelektrode in das Werkstück reduziert werden.

Im dargestellten Ausführungsbeispiel sind die Zeitabstände zwischen dem Beginn einer Timer-Bewegung, und zwar unabhängig, ob es sich hierbei um eine langhubige oder um eine kurzhubige Timer-Bewegung handelt, gleich. Die Anfangszeitpunkte der kurzhubigen Timer-Bewegungen II sind mit $t_{a1}$, $t_{a2}$, ... $t_{an}$, T + $t_{a1}$ ... bezeichnet, die Anfangszeitpunkte der langhubigen Timer-Bewegungen hingegen mit $T_a$, $2T_a$.

Das in Fig. 3 gezeigte Schaltschema ermöglicht die selbsttätige Einstellung einer optimalen Timerfrequenz während einer Start- oder Einstellphase, eine Anpassung dieser Frequenz an sich möglicherweise während des Erodierens ändernde Bedingungen in der Eroderzone sowie weiterhin eine Anpassung der Hubhöhe der Timer-Bewegungen an eine zunehmende Eindringtiefe der Werkzeugelektrode 3 in das Werkstück 3'.

Im einzelnen ist gemäß Fig. 3 ein Impulsgenerator 4 vorgesehen, der Spannungs-/Strom-Impulse an die den Arbeitsspalt begrenzenden Elektroden liefert. Dies sind die Werkzeugelektrode 3 und die Werkstückelektrode 3', im folgenden nur Werkstück genannt. Der Arbeitsspalt, im folgenden die Erodierzone genannt, ist durch den Pfeil P markiert.

Ein Antrieb 2 schiebt dies Werkzeugelektrode 3 unter normalen Arbeitsbedingungen kontinuierlich gegen das Werkstück 3' und zwar so, daß ein im wesentlicher konstanter Abstand zwischen der Frontfläche der Werkzeugelektrode 3 und der ihr unmittelbar gegenüberliegenden Fläche des Werkstückes 3' besteht. Eine Steuerschaltung 1 steuert den Betrieb des Antriebes 2.

Wird nicht in Z-Richtung erodiert - wie voranstehend vorausgesetzt - sondern beispielsweise in X- oder Y-Richtung, dann schiebt der Antrieb 2 die Werkzeugelektrode 3 in X- oder Y-Richtung gegen das Werkstück 3' vor.

Die Strom-/Spannungsverhältnisse in der Erodierzone werden von einem Funkenspannungs-Analysator 5 ermittelt. Dessen Ausgangssignal c gibt den Kurzschlußanteil an. Das Ausgangssginal c wird in einem Komparator 7 mit einem Referenzsignal einer Referenzwertschaltung 6 verglichen. Ist der Kurzschlußanteil zu hoch, liefert der Komparator 7 ein Ausgangssignal T an einen ersten Stelleingang 17 der Steuerschaltung 1. Das Ausgangssignal T bewirkt eine langhubige Timer-Bewegung I (s. Fig. 2) zur Sanierung der Erodierzone.

Der bislang beschriebene Teil der Schaltungsanordnung ist an sich bekannt. Ebenfalls die Möglichkeit, vom Komparator 7 weitere Signale der Steuerschaltung 1 zuzuführen, damit diese ihrerseits den Vorschub der Werkzeugelektrode 3 in das Werkstück 3' so steuert, daß der eingangs genannte konstante Abstand zwischen Werkzeugelektrode 3 und Werkstück 3' im wesentlichen eingehalten wird.

Gemäß Fig. 1 ist es auch bekannt, unabhängig vom Auftreten eines Kurzschlußsignales T in konstanten Zeitabständen erste Timer-Bewegungen I, d. h. erste Hub-/Senk-Bewegungen der Werkzeugelektrode 3 durchzuführen, wobei ein eventuell auftretendes Kurzschlußsignal T eine zusätzliche Hub-/Senk-Bewegung bewirkt.

Zur Einstellung eines optimalen Zeitabstandes zwischen solchen Timer-Bewegungen dient bei der Schaltung gemäß Fig. 3 ein Zähler 8, ein ihm vorgeschalteter Taktgeber 9, ein weiterer Zähler 10, eine den Zählern 8 und 10 nachgeschaltete Summier-/Dividier-Schaltung 11, eine dieser und einem Register 13 nachgeschaltete Subtrahierschaltung 12 und eine der Subtrahierschaltung 12 nachgeschaltete Speicher- und Korrekturschaltung 14.

In der Einstellphase, d.h. zu Beginn des Erodierprozesses, befinden sich folgende Schalter in der leitenden Stellung: ein zwischen dem Komparator 7 und dem Zähler 8 angeordneter Schalter S1, ein zwischen dem Komparator 7 und dem Zähler 10 angeordneter Schalter S2 und ein zwischen der Subtrahierschaltung 12 und der Speicher- und Korrekturschaltung 14 angeordneter Schalter S5. In der offen, d.h. nicht leitenden Stellung befinden sich dagegen weitere Schalter S3 und S4. Die Offenstellung des Schalters S3 verhindert eine Korrektur der in der Speicher-und Korrekturschaltung 14 abgespeicherten Werte. In der Offenstellung des Schalters S3 dient die Speicher- und Korrekturschaltung lediglich als Speicherschaltung. Die Offenstellung des Schalters S4 verhindert, daß die Steuersignale eines ihm vorgeschalteten Komparators 15 als Reset- Signale an den Zähler 8 bzw. als Steuersignale an die Steuerschaltung 1 weitergeleitet werden.

In der Einstellphase wird die Steuerschaltung 1 zum Auslösen einer Timer-Bewegung ausschließlich vom Kurzschlußsignal T angesteuert. In dieser Phase gibt der Taktgeber 9 fortlaufend Zeittaktsignale an den Zähleingang des Zählers 8 ab. Das Kurzschlußsignal T steuert einen der Reset-Eingänge des Zählers 8 an und gibt zusätzlich den Zählerinhalt frei. Das Ausgangssignal ET des Zählers 8 gibt demnach die Zeitspanne zwischen zwei Kurzschlüssen, genauer zwischen zwei sich anbahnenden Kurzschluß-Situationen an. Der Zähleingang des Zählers 10 wird ebenfalls vom Kurzschlußsignal T angesteuert. Dessen Ausgangssignal N repräsentiert die Anzahl der während der Einstellphase auftretenden Kurzschlüsse.

Die Recheneingänge der Summier-/Dividier-Schaltung 11 werden von den Ausgangssignalen ET und N der Zähler 8 und 10 beaufschlagt. Die Summier-/Dividier- Schaltung 11 summiert die Signale ET des Zählers 8 auf und dividiert die so erhaltene Summe durch das Ausgangssignal N des Zählers 10. Das Ausgangssignal ETA Summier-/Dividier-Shaltung 11 repräsentiert den arithmetischen Mittelwert des Ausgangssignals des Zählers 8, also die mittlere Zeit zwischen zwei vom Ausgangssignal T des Komparators 7 veranlaßten Timer-Bewegungen.

Die Recheneingänge der Subtrahierschaltung 12 werden vom Mittelwertsignal ETA und von einem Ausgangssignal Δ E eines Registers 13 beaufschlagt. Das Ausgangssignal Δ E des Registers 13 ist eine positive Größe, die in der Substrahierschaltung 12 vom Mittelwertsignal ETA abgezogen wird. Die Substrahierschaltung 12 verkleinert demnach das Mittelwertsignal ETA um die Größe Δ E. Das Ausgangssignal ES der Substrahierschaltung 12 hat demnach einen Sicherheitsabstand vom Mittelwert ETA der Zeitdauer zwischen zwei Kurzschlußsignalen T.

Dieses Ausgangssignal ES wird während der Einstellphase in der Speicher-/Korrektur- Schaltung 14 gespeichert und dient dann nach der Einstellphase als Referenzwert für den Komparator 15.

Am Ende Einstellphase werden die Schalter S1, S2 und S5 geöffnet, d. h. in den nichtleitenden Zustand gebracht, die Schalter S3 und S4 hingegen geschlossen, d. h. in den leitenden Zustand gebracht. Der Taktgeber 9 gibt weiterhin in der sich nun anschließenden Arbeitsphase seine Zeittaktsignale an den Zähler 8 ab. Dessen an seinem zweiten Zählausgang liegende Ausgangssignale Z werden nunmehr dem einen Eingang des Komparators 15 zugeführt. Der andere Komparatoreingang erhält das Ausgangssignal ES1 der Speicher-/Korrektur-Schaltung 14. Dieses Signal ist gleich ES, falls keine Korrektur in der Schaltung 14 erfolgt ist. Sobald das Ausgangssignal Z des Zählers 8 den Wert des Ausgangssignales ES1 der Speicher-/Korrektur-Schaltung 14 erreicht hat, gibt der Komparator 15 seinerseits ein Steuersignal T1 ab. Dieses Steuersignal wird einerseits einem Reset-Eingang des Zählers 8 zugeführt, stellt diesen also zurück. Im Anschluß daran beginnt der Zähler 8 von neuem zu zählen. Andererseits wird das Ausgangssignal T1 des Komparators 15 einem Steuereingang 18 der Steuerschaltung 1 zugeführt.

Dies hat zur Folge, daß die Steuerschaltung 1 an ihrem Signalausgang 18′ ein Signal an den Antrieb 2 abgibt. Der Antrieb 2 ist zweistufig ausgelegt, nämlich derart, daß er bei Ansteuerung durch den Signalausgang 18′ der Steuerschaltung 1 eine kurzhubige Timer-Bewegung II ausführt - bei Ansteuerung durch einen weiteren Steuerausgang 17′ der Steuerschaltung 1 hingegen eine langhubige Timer-Bewegung I. Im übrigen ist die Steuerschaltung 1 so aufgebaut, daß sie stets nur an einem der beiden Steuerausgänge 17′ und 18′ ein Signal abgibt. Dabit hat der Steuerausgang 17′ insoweit Priorität, als er stets dann beaufschlagt wird, wenn ein Signal am Steuereingang 17 anliegt, gleichgültig ob gleichzeitig auch ein Signal am Steuereingang 18 anliegt. Hierdurch wird erreicht, daß bei Auftreten eines Kurzschlußsignales T stets eine langhubige Timer-Bewegung I ausgeführt wird; ferner, wenn eine die Steuereingänge 17 und 18 überbrückende Frequenzteilerschaltung 16 ein Ausgangssignal abgibt.

Die Frequenzteilerschaltung 16 ist nun so ausgelegt, daß sie jeden (n + 1) ten Steuerimpuls T1 des Komparators 15 an den Steuereingang 17 der Steuerschaltung 1 weitergibt.

Hierdurch wird erreicht, daß nach n kurzhubigen Timer-Bewegungen II eine langhubige Timer-Bewegung I folgt, und dieser wiederum n kurzhubige Timer-Bewegungen. Ferner, daß der Zeitabstand zwischen diesen Timer-Bewegungen gleich der durch das Ausgangssignal ES1 der Speicher-/Korrektur-Schaltung 14 repräsentierten Zeitgröße ist. Mit anderen Worten entspricht die Frequenz der Timer-Bewegungen dem Reziproken von ES1.

Zur Korrektur des von der Speicher-/Korrektur-Schaltung 14 gelieferten Referenzwertes ES1 sind zwei Zähler, nämlich die Zähler 10′ und 10″ vorgesehen, denen jeweils eine Schwellwertstufe 20′ und 20″ nachgeschaltet ist. Die Ausgänge der Schwellwertstufen 20′ und 20″ sind mit den Eingängen der Speicher-/Korrektur-Schaltung 14 verbunden. Sie liefern Korrektursignale -$\Delta$ ES und +$\Delta$ES. Die Zähleingänge der beiden Zähler 10′ und 10″ sind mit dem Kurzschlußausgang des Komparators 7 verbunden, zählen also die Zahl der Kurzschlüsse. Die Reset-Eingänge der Zähler 10′ und 10″ sind mit dem Taktausgang des Taktgebers 9 über zwei Teilerstufen $D_1$ und $D_2$ verbunden. Die Teiler $D_1$ und $D_2$ bestimmen demnach die Zählzeit der Zähler 10′ und 10″. Dabei werden im Teiler $D_2$ die Taktimpulse des Taktgebers 9 durch eine größere Zahl geteilt als im Teiler $D_1$. Der Zähler 10″ zählt also während einer längeren Zeit als der Zähler 10′.

Ist die vom Zähler 10′ innerhalb der vorgebenen Zählzeit gezählte Kurzschluß-Anzahl kleiner als der Schwellwert des Schwellwertschalters 20′, gibt letzterer kein Ausgangsignal ab. Ist die vom Zähler 10′ gezählte Kurzschlußzahl gleich oder größer als der Schwellwert der Schwellwertschaltung 20′ gibt letzterer ein Ausgangssignal, nämlich das Signal -$\Delta$ES an die Speicher-/Korrektur-Schaltung 14 ab. Ein Auftreten des Ausgangssignales -$\Delta$ES besagt, daß trotz der regelmäßigen Timer-Bewegungen zu viele Kurzschlüsse aufgetreten sind und demnach der Referenzwert ES1 für den Komparator 15 verkleinert, mit anderen Worten die Frequenz der Timer-Bewegungen vergrößert werden muß.

Erreicht hingegen die vom Zähler 10″ gezählte Kurzschlußanzahl den Schwellwert der ihm nachgeschalteten Schwellwertschaltung 20′ oder überschreitet diese sogar, dann gibt die Schwellwertschaltung 20″ kein Ausgangssignal ab. Bleibt jedoch die vom Zähler 10″ gezählte Kurzschlußanzahl unterhalb der Vorgabe der Schwellwertschaltung 20″, gibt letztere ein Korrektursignal +$\Delta$ES an die Speicher-/Korrektur-Schaltung 14 ab. Ein Auftreten des Ausgangssignales +$\Delta$ES der Schwellwertschaltung 20″ bedeutet, daß zu wenige Kurzschlüsse, insbesondere gar keine Kurzschlüsse aufgetreten sind und demnach die Referenzzeit ES1 für den Komparator 15 vergrößert, mit anderen Worten die Frequenz der Timer-Bewegungen verkleinert werden kann. Diese Maßnahme führt dazu, daß so wenig wie möglich regelmäßige Timer-Bewegungen durchgeführt werden.

Eine dynamische Beruhigung der Korrekturschaltung wird dadurch erreicht, daß den beiden Schwellwertschaltungen 20′ und 20″ jeweils eine Teilerschaltung $D_3$ bzw. $D_4$ nachgeschaltet sind, die beide beispielsweise nur jeden dritten Ausgangimpuls der Schwellwertschaltungen 20′ und 20″ an die Speicher-/Korrektur-Schaltung 14 abgeben.

Zur Veränderung der Hubhöhe H der Timer-Bewegungen I und II ist noch eine Meßschaltung 23 zur Ermittlung der Eindringtiefe der Werkstückelektrode 3 in das Werkstück 3′ vorgesehen. Das Ausgangssignal d der Meßschaltung 23 wird einem Stellglied 22 zugeführt, das seinerseits ein Ausgangssignal an den Antrieb 2 abgibt und dadurch mit zunehmender Eindringtiefe der Werkzeugelektrode 3 in das Werkstück 3′ die Hubhöhe H der Timer-Bewegungen I, II verändert, vorzugsweise nicht kontinuierlich sondern stufenweise.

**Patentansprüche**

1.  Verfahren zum Spülen der Erodierzone beim elektroerosiven Senken, bei welchem im Dielektrikum Hub/Senk-Bewegungen (I) der Werkzeugelektrode (3) relativ zum Werkstück (3′) nach einem sich periodisch wiederholenden Grundmuster durchgeführt werden, gekennzeichnet durch folgendes Grundmuster: zwischen zwei ersten Hub-/Senk-Bewegungen (I) wird/werden eine oder mehrere kurzhubigere zweite Hub-/Senk-Bewegung(en) (II) durchgeführt.

2. Verfahren nach Anspruch 1, bei welchem mehrere zweite Hub-/Senk-Bewegungen (II) zwischen zwei ersten Hub-/Senk-Bewegungen (I) durchgeführt werden, dadurch gekennzeichnet, daß diese zweiten Hub-/Senk-Bewegungen (II) in konstanten Zeitabständen durchgeführt werden.

3. Verfahren nach Anspruch 2, dadurch gekennzeichnet, daß auch die Zeitabstände zwischen den Anfangspunkten $ta_n$, Ta, $(T + ta_1)$ zweier unmittelbar aufeinanderfolgender Hub-/Senk-Bewegungen (I, II) oder zwischen den Endpunkten der Hub-/Senk-Bewegungen (I, II) und den Anfangspunkten $(ta_n$, Ta, $(T + ta_1))$ der ihr unmittelbar folgenden Hub-/Senk-Bewegungen (I, II) gleich sind.

4. Verfahren nach einem der vorstehenden Ansprüche, bei welchem mehrere zweite Hub-/Senk-Bewegungen (II) zwischen zwei ersten Hub-/Senk-Bewegungen (I) durchgeführt werden, dadurch gekennzeichnet, daß die Anzahl (n) und/oder die Hubhöhe (h) dieser zweiten Hub-/Senk-Bewegungen (II) konstant gehalten wird.

5. Verfahren nach einem der vorstehenden Ansprüche, dadurch gekennzeichnet, daß die Hubhöhe (h) der zweiten Hub-/Senk-Bewegungen (II) ein Zwanzigstel bis drei Viertel der Hubhöhe (H) der ersten Hub-/Senk-Bewegungen (I) beträgt.

6. Verfahren nach Anspruch 5, dadurch gekennzeichnet, daß die Hubhöhe (H) der zweiten Hub-/Senk-Bewegungen (II) ein Zehntel bis einhalb der Hubhöhe (H) der ersten Hub-/Senk-Bewegungen (I) beträgt.

7. Verfahren nach Anspruch 6, dadurch gekennzeichnet, daß die Hubhöhe (h) der zweiten Hub-/Senk-Bewegungen (II) ein Sechstel bis ein Drittel der Hubhöhe (H) der ersten Hub-/Senk-Bewegungen (I) beträgt.

8. Verfahren nach wenigstens einem der Ansprüche 1 und 3 bis 7 dadurch gekennzeichnet, daß der Zeitabstand (T; $(ta_n - ta_{n-1})$ der Hub-/Senk-Bewegungen (I, II) in Abhängigkeit von den Prozeßbedingungen in der Erodierzone gesteuert wird.

9. Vorrichtung nach wenigstens einem der Ansprüche 1 bis 3 und 5 bis 8, dadurch gekennzeichnet, daß die Hubhöhe (h) der Hub-/Senk-Bewegungen (I, II) in Abhängigkeit von den Prozeßbedingungen in der Erodierzone gesteuert wird.

10. Verfahren nach Anspruch 8 oder 9, dadurch gekennzeichnet, daß man zur Einstellung des Zeitabstandes der Hub-/Senk-Bewegungen (I, II)

a) den Erodierprozeß während einer Einstellphase vorgegebener Dauer frei laufen läßt, dabei die Erodierzone auf eine sich anbahnende Kurzschluß-Situation hin überwacht und bei sich anbahnender Kurzschluß-Situation eine erste Hub-/Senk-Bewegung (I) durchführt,

b) die Anzahl (N) der sich während der Einstellphase anbahnenden Kurzschluß-Situationen sowie deren gegenseitigen Zeitstände (ET) mißt, daraus den mittleren Zeitabstand (ETA), im folgenden mittlerer Kurzschluß-Zeitabstand genannt, ermittelt, und

c) den mittleren Kurzschluß-Zeitabstand (ETA) als Zeitabstand zwischen zwei unmittelbar aufeinanderfolgenden Hub-/Senk-Bewegungen (I, II) vorgibt.

11. Verfahren nach Anspruch 10, dadurch gekennzeichnet, daß als vorgegebener Zeitabstand zwischen zwei unmittelbar aufeinanderfolgenden Hub-/Senk-Bewegungen (I, II) eine Zeitdauer gewählt wird, die um einen Sicherheitswert $(\triangle E)$ kleiner als der mittlere Kurzschluß-Zeitabstand (ETA) ist.

12. Verfahren nach einem der Ansprüche 8 bis 11, dadurch gekennzeichnet, daß zur Änderung des vorgegebenen Zeitabstandes zwischen unmittelbar aufeinanderfolgenden ersten (I), zweiten (II) und/oder ersten und zweiten Hub-/Senk-Bewegungen (I, II)

a) die Erodierzone auf eine sich anbahnende Kurzschluß-Situation überwacht und bei sich anbahnender Kurzschluß-Situation unabhängig vom vorgegebenen Zeitabstand (ES1) der Hub-/Senk-Bewegungen (I, II) zusätzlich eine Hub-/Senk-Bewegung durchgeführt wird,

b) die Häufigkeit der zusätzlich durchgeführten Hub-/Senk-Bewegungen ermittelt und

c) in Abhängigkeit dieser Häufigkeit die Länge des vorgegebenen Zeitabstandes (ES1) geändert und der so geänderte Zeitabstand (ES1) als neuer Zeitabstand vorgegeben wird.

13. Verfahren nach Anspruch 12, dadurch gekennzeichnet, daß der vorgegebene Zeitabstand (ES1) zwischen den Hub-/Senk-Bewegungen (I, II) verkleinert wird, falls innerhalb vorgegebener erster Zählintervalle oder innerhalb einer vorgegebenen Zahl unmittelbar aufeinanderfolgender erster Zählintervalle mehr als eine kurzschlußbedingte zusätzlich Hub-/Senk-Bewegung durchgeführt wird.

14. Verfahren nach Anspruch 12 oder 13, dadurch gekennzeichnet, daß der vorgegebene Zeitabstand (ES1) zwischen den Hub-/Senk-Bewegungen (I, II) vergrößert wird, falls innerhalb vorgegebener zweiter Zählintervalle oder innerhalb mehrerer unmittelbar aufeinanderfolgender vorgegebener zweiter Zählintervalle keine kurzschlußbedingten zusätzlichen Hub-/Senk-Bewegungen durchgeführt werden.

15. Vorrichtung zum Spülen der Erodierzone einer elektroerosiven Senkanlage mit einer Hub-/Senk-Einrichtung (2) und einer Timer-Einrichtung (1, 8, 9, 14, 15, 16) zum Bewirken eines periodisch sich wiederholenden Grundmusters von Hub-/Senk-Bewegungen (I) der Werkzeugelektrode (3) relativ zum Werkstück (3') im Dielektrikum, zur Durchführung des Verfahrens nach Anspruch 1, dadurch gekennzeichnet, daß die Timer-Einrichung (1, 8, 9, 14, 15, 16) zwei-stufig (16) ausgelegt ist, derart, daß sie folgendes Grundmuster erzeugt: zwischen zwei ersten Hub-/Senk-Bewegungen (I) wird eine vorgegebene Zahl (n) kurzhubiger zweiter Hub-/Senk-Bewegungen (II) der Werkzeugelektrode (3) relativ zum Werkstück (3') ausführt.

16. Vorrichtung nach Anspruch 15 zur Durchführung des Verfahrens nach Anspruch 12, gekennzeichnet durch
    a) eine Kurzschluß-Überwachungseinrichtung (5, 6, 7), die bei einer sich in der Erodierzone anbahnenden Kurzschluß-Situation ein Kurzschlußsignal (T) abgibt und über die Timer-Einrichtung (1, 8, 9, 14, 15, 16) mit der Hub-/Senk-Einrichtung (2) verbunden ist, derart, daß letztere beim Auftreten eines Kurzschluß-Signals (T) eine zusätzliche Hub-/Senkbewegung durchführt, und
    b) eine Einrichtung (10', 10", 20', 20") zur Ermittlung der Häufigkeit der zusätzlich ausgelösten Hub-/Senk-Bewegungen,
    c) deren Signalausgang mit dem Stelleingang eines an der Timer-Einrichtung (1, 8, 9, 14, 15, 16) vorgesehenen Stellgliedes (14) zur Veränderung des vorgegebenen Zeitabstandes (ES1) zwischen den Hub-/Senk-Bewegungen (I, II) verbunden ist.

17. Vorrichtung nach Anspruch 16 zur Durchführung des Verfahrens nach Anspruch 13, dadurch gekennzeichnet, daß die Einrichtung (10', 10", 20', 20") zur Ermittlung der Häufigkeit der durch Kurzschluß zusätzlich ausgelösten Hub-/Senk-Bewegungen aufweist:
    eine zur Zählung der innerhalb erster vorgegebener Zählintervalle ($D_1$) erfolgten zusätzlichen Hub-/Senk-Bewegungen ausgelegte Zählstufe (10') und eine damit verbundene erste Schwellwertschaltung (20'), deren Ausgang mit einem ersten Stelleingang des Stellgliedes (14) der Timer-Einrichtung (1, 8, 9, 14, 15, 16) verbunden ist, derart, daß die erste Schwellwertschaltung (20') dann den ersten Stelleingang des Stellgliedes (14) mit einem Stellsignal (-$\triangle$ ES) zur Verkleinerung des vorgegebenen ersten Zeitabstandes (ES) beaufschlagt, wenn der Zählstufeninhalt einen vorgegebenen ersten Schwellwert überschreitet.

18. Vorrichtung nach Anspruch 15 oder 16 zur Durchführung des Verfahrens nach Anspruch 14, dadurch gekennzeichnet, daß die Einrichung (10', 10", 20', 20") zur Ermittlung der Häufigkeit der durch Kurzschluß zusätzlich ausgelösten Hub-/Senk-Bewegungen aufweist:
    eine zur Zählung innerhalb zweiter vorgegebener Zählintervalle ($D_2$) erfolgter zusätzlicher Hub-/Senk-Bewegungen ausgelegte zweite Zählstufe (10") sowie eine damit verbundene zweite Schwellwertschaltung (20"), deren Ausgang mit einem zweiten Stelleingang des Stellgliedes (14) der Timer-Einrichtung (1, 8, 9, 14, 15, 16) verbunden ist, derart, daß die zweite Schwellwertschaltung (20") dann den zweiten Stelleingang des Stellgliedes (14) mit einem Stellsignal (+$\triangle$ ES) beaufschlagt, wenn der Zählstufeninhalt einen vorgegebenen zweiten Schwellwert nicht erreicht.

19. Vorrichtung nach einem der Ansprüche 15 bis 18 zur Durchführung des Verfahrens nach einem der Ansprüche 8 bis 14, dadurch gekennzeichnet, daß die Timer-Einrichtung (1, 8, 9, 14, 15, 16) ein Stellglied (22) zur Einstellung der Hubhöhe (H) der ersten Hub-/Senk-Bewegungen (I) und eine Einrichtung (23) zur Ermittlung der Eindringtiefe (d) der Werkzeugelektrode (3) in das Werkstück (3') aufweist, wobei der Signalausgang der Eindringtiefen-Ermittlungseinrichtung (23) mit dem Stelleingang des Stellgliedes (22) zur Einstellung der Hubhöhe verbunden ist.

## Claims

1. Process for washing out the erosion zone during electro-erosive sinking wherein in the dielectric, lifting/sinking movements (I) of the tool electrode (3) relative to the workpiece (3') are carried out according to a periodically repeating basic pattern, characterised by the following basic pattern: one or more shorter-stroke second lifting/sinking movement(s) is/are carried out between two first lifting/sinking movements (I).

2. Process according to claim 1 wherein several second lifting/sinking movements (II) are carried out between two first lifting/sinking movements (I), characterised in that these second lifting/sinking movements (II) are carried out at constant time intervals.

3. Process according to claim 2 characterised in that the time intervals between the starting points $ta_n$, Ta, $(T + ta_1)$ of two directly following lifting/sinking movements (I,II) or between the end points of the lifting/sinking movements (I,II) and the starting points $(ta_n, Ta, (T + ta_1))$ of the lifting/sinking movements (I,II) are also the same.

4. Process according to one of the preceding claims, wherein several second lifting/sinking movements (II) are carried out between two first lifting/sinking movements (I) characterised in that the number (n) and/or the stroke height (h) of these second lifting/sinking movements is kept constant.

5. Process according to one of the preceding claims, characterised in that the stroke height (h) of the second lifting/sinking movements (II) amounts to a twentieth to three quarters of the stroke height (H) of the first lifting/sinking movements (I).

6. Process according to claim 5 characterised in that the stroke height (h) of the second lifting/sinking movements (II) amounts to a tenth to a half of the stroke height (h) of the first lifting/sinking movements (I).

7. Process according to claim 6 characterised in that the stroke height (h) of the second lifting/sinking movements (II) amounts to a sixth to a third of the stroke height (H) of the first lifting/sinking movements (I).

8. Process according to at least one of claims 1 and 3 to 7 characterised in that the time interval (T; $(ta_n - ta_{n-1})$ of the lifting/sinking movements (I,II) is controlled in dependence on the processing conditions in the erosion zone.

9. Device according to at least one of claims 1 to 3 and 5 to 8 characterised in that the stroke height (h) of the lifting/sinking movements (I,II) is controlled in dependence on the processing conditions in the erosion zone.

10. Process according to claim 8 or 9 characterised in that in order to set the time interval of the lifting/sinking movements (I,II)
   a) the erosion process is allowed to run free during a setting phase of a predetermined period whereby the erosion zone is monitored for the start of a short-circuit situation and when the short-circuit situation is initiated a first lifting/sinking movement (I) is carried out;
   b) the number (N) of the short circuit situations which are initiated during the setting phase as well as their mutual time intervals (ET) are measured and from this the mean time interval (ETA), hereinafter called mean short-circuit time interval, is detected, and
   c) the mean short circuit time interval (ETA) is provided as the time interval between two directly following lifting/sinking movements (I,II).

11. Process according to claim 10 characterised in that as the predetermined time interval between two directly following lifting/sinking movements (I,II), a time period is selected which is less by a safety value ($\triangle E$) than the mean short circuit time interval (ETA).

12. Process according to one of claims 8 to 11 characterised in that in order to alter the preset time interval between directly following first (I), second (II) and/or first and second lifting/sinking movement (I,II)
   a) the erosion zone is monitored for the start of a short-circuit situation and when a short-circuit situation starts irrespective of the preset time interval (ES1) of the lifting/sinking movements (I,II) an additional lifting/sinking movement is carried out;
   b) the frequency of the additional lifting/sinking movements is detected and
   c) in dependence on this frequency the length of the preset time interval (ES1) is altered and the thus altered time interval (ES1) is given as the new time interval.

13. Process according to claim 12 characterised in that the predetermined time interval (ES1) between the lifting/sinking movements (I,II) is reduced if within a predetermined first counting interval or within a predetermined number of directly following first counting intervals more than one additional lifting/sinking movement caused by a short-circuit is produced.

14. Process according to claim 12 or 13 characterised in that the predetermined time interval (ES1) between the lifting/sinking movements (I,II) is increased if within a predetermined second counting interval or within several directly following predetermined second counting intervals no additional lifting/sinking movements caused by a short-circuit are produced.

15. Device for washing out the erosion zone of an electro-erosive sinking plant with a lifting/sinking device (2) and a timer device (1,8,9,14,15,16) for causing a periodically repeating basic pattern of lifting/sinking movements (I) of the tool electrode (3) relative to the workpiece (3') in the dielectric, for carrying out the process according to claim 1, characterised in that the timer device (1,8,9,14,15,16) is two-phased (16) so that it produces the following basic pattern: a predetermined number (n) of shorter-stroke second lifting/sinking movements (II) of the tool electrode (3) relative to the workpiece (3') is carried out between two first lifting/sinking movements (I).

16. Device according to claim 15 for carrying out the process according to claim 12 characterised by

a) a short-circuit monitoring device (5,6,7) which in the event of a short-circuit situation arising in the erosion zone releases a short-circuit signal (T) and is connected by the timer device (1,8,9,14,15,16) to the lifting/sinking device (2) so that the latter carries out an additional lifting/sinking movement when a short-circuit signal (T) appears, and

b) a device (10',10",20',20") for detecting the frequency of the additionally triggered lifting/sinking movements,

c) whose signal output is connected to the setting input of a setting member (14) provided on the timer device (1, 8, 9, 14, 15,16) for altering the preset time interval (ES1) between the lifting/sinking movements (I,II).

17. Device according to claim 16 for carrying out the process according to claim 13, characterised in that the device (10', 10", 20', 20") for detecting the frequency of the lifting/sinking movements additionally triggered by the short circuit has:

a counting phase (10') designed for counting the additional lifting/sinking movements carried out within a first predetermined counting interval ($D_1$), and a first threshold value circuit (20') connected therewith whose output is connected to a first setting input of the setting member (14) of the timer device (1, 8, 9, 14, 15, 16) so that the first threshold value circuit (20') then impinges on the first setting input of the setting member (14) with a setting signal (- $\triangle ES$) to reduce the predetermined first time interval (ES) when the counting stage content exceeds a predetermined first threshold value.

18. Device according to claim 15 or 16 for carrying out the process according to claim 14 characterised in that the device (10',10", 20', 20") for detecting the frequency of the lifting/sinking movements additionally released by the short-circuit has:

a second counting stage (10") designed for counting additional lifting/sinking movements carried out within second predetermined counting intervals ($D_2$) as well as a second threshold value circuit (20") connected therewith whose output is connected to a second setting input of the setting member (14) of the timer device (1, 8, 9, 14, 15, 16) so that the second threshold value circuit (20") then impinges on the second setting input of the setting member (14) with a setting signal (+ $\triangle ES$) when the counting phase content does not reach a preset second threshold value.

19. Device according to one of claims 15 to 18 for carrying out the process according to one of claims 8 to 14 characterised in that the timer device (1, 8, 9, 14, 15 16) has a setting member (22) for adjusting the stroke height (H) of the first lifting/sinking movements (I) and a device (23) for detecting the depth (d) of penetration of the tool electrode (3) into the workpiece (3') wherein the signal output of the penetration depth detector device (23) is connected to the setting input of the setting member (22) for adjusting the stroke height.

**Revendications**

1. Procédé de rinçage de la zone d'érosion dans le forage par électro-érosion, suivant lequel des mouvements de montée/descente (I) de l'électrode-outil (3) par rapport à la pièce (3') sont exécutés dans le diélectrique suivant un schéma de base qui se répète périodiquement, caractérisé par le schéma de base suivant : un ou plusieurs second(s) mouvement(s) de montée/descente (II) à faible course est/sont exécuté(s) entre deux premiers mouvements de montée/descente (I).

2. Procédé selon la revendication 1, suivant lequel plusieurs seconds mouvements de montée/descente (II) sont exécutés entre deux premiers mouvements de montée/descente (I), caractérisé en ce que ces seconds mouvements de montée/descente (II) sont exécutés à intervalles de temps constants.

3. Procédé selon la revendication 2, caractérisé en ce que les intervalles de temps séparant les instants de début $ta_n$, Ta, $(T + ta_1)$ de deux mouvements de montée/descente (I, II) qui se suivent immédiatement ou qui séparent les instants finaux des mouvements de montée/descente (I, II) et les instants de début $ta_n$, $(T + ta_1)$) des mouvements de montée/descente (I, II) qui leur font immédiatement suite sont aussi égaux.

4. Procédé selon l'une des revendications précédentes, suivant lequel plusieurs seconds mouvements de montée/descente (II) sont exécutés entre deux premiers mouvements (I) de montée/descente, caractérisé en ce que le nombre (n) et/ou la hauteur de course (h) de ces seconds mouvements de montée/descente (II) est maintenu à une valeur constante.

5. Procédé selon l'une des revendications précédentes, caractérisé en ce que la hauteur de course (h) des seconds mouvements de montée/descente (II) correspond à un vingtième à trois quarts de la hauteur de course (H) des premiers mouvements de montée/descente (I).

6. Procédé selon la revendication 5, caractérisé en ce que la hauteur de course (h) des seconds mouvements de montée/descente (II) correspond à un dixième à la moitié de la hauteur de course (H) des premiers mouvements de montée/descente (I).

7. Procédé selon la revendication 6, caractérisé en ce que la hauteur de course (h) des seconds mouvements de montée/descente (II) correspond à un sixième à un tiers de la hauteur de course (H) des premiers mouvements de montée/descente (I).

8. Procédé selon au moins l'une des revendications 1 et 3 à 7, caractérisé en ce que l'intervalle de temps $(T ; (ta_n - ta_{n-1})$ des mouvements de montée/descente (I, II) est commandé en fonction des conditions du processus régnant dans la zone d'érosion.

9. Dispositif selon au moins l'une des revendications 1 à 3 et 5 à 8, caractérisé en ce que la hauteur de course (h) des mouvements de montée/descente (I, II) est commandée en fonction des conditions du processus régnant dans la zone d'érosion.

10. Procédé selon la revendication 8 ou 9, caractérisé en ce que, pour le réglage de l'intervalle de temps séparant les mouvements de montée/descente (I, II)
    a) on fait se dérouler librement le processus d'érosion pendant une phase de réglage de durée prédéterminée, on contrôle pendant ce temps si une situation de court-circuit se crée dans la zone d'érosion en cas d'apparition d'une situation de court-circuit, on exécute un premier mouvement de montée/descente (I),
    b) on mesure le nombre (N) des situations de court-circuit qui se présentent pendant la phase de réglage ainsi que les intervalles de temps (ET) qui les séparent, on en détermine la moyenne de l'intervalle de temps (ETA), appelée par la suite moyenne de l'intervalle de temps entre courts-circuits, et
    c) on prescrit la moyenne de l'intervalle de temps entre court-circuits (ETA) comme étant l'intervalle de temps séparant deux mouvements de montée/descente (I, II) qui se succèdent immédiatement.

11. Procédé selon la revendication 10, caractérisé en ce que l'intervalle de temps prescrit qui est adopté entre deux mouvements de montée/descente (I, II) qui se succèdent immédiatement est une durée qui est inférieure d'une marge de sécurité $(\triangle E)$ à la moyenne de l'intervalle de temps entre courts-circuits (ETA).

12. Procédé selon l'une des revendications 8 à 11, caractérisé en ce que, pour faire varier l'intervalle de temps prescrit entre premiers (I), seconds (II) et/ou premiers et seconds mouvements de montée/descente (I, II)
    a) on contrôle s'il se présente une situation de court-circuit dans la zone d'érosion et en cas d'apparition d'une situation de court-circuit et indépendamment de l'intervalle de temps prescrit (ES1) entre les mouvements de montée/descente (I, II), un mouvement auxiliaire de montée/descente est exécuté,
    b) on détermine la fréquence de l'exécution des mouvements auxiliaires de montée/descente et

c) on modifie la longueur de l'intervalle de temps prescrit (ES1) en fonction de cette fréquence et l'intervalle de temps ainsi modifiée (ES1) est prescrit comme étant le nouvel intervalle de temps.

13. Procédé selon la revendication 12, caractérisé en ce que l'intervalle de temps prescrit (ES1) séparant les mouvements de montée/descente (I, II) subit une réduction si, pendant un premier intervalle de temps prescrit ou pendant un nombre prescrit de premiers intervalles de temps se succédant immédiatement, plus d'un mouvement auxiliaire de montée/descente est exécuté en conséquence d'un court-circuit.

14. Procédé selon la revendication 12 ou 13, caractérisé en ce que l'intervalle de temps prescrit (ES1) séparant les mouvements de montée/descente (I, II) est augmenté si, pendant des seconds intervalles de temps prescrits ou pendant plusieurs seconds intervalles de temps prescrits se succédant immédiatement, aucun mouvement auxiliaire de montée/descente n'est exécuté par suite d'un court-circuit.

15. Dispositif de rinçage de la zone d'érosion d'une installation de forage par électro-érosion, comprenant un dispositif de montée/descente (2) et un dispositif de régulation (1, 8, 9, 14, 15, 16) destiné à provoquer des mouvements de montée/descente (I) de l'électrode-outil (3) par rapport à la pièce (3') dans le diélectrique suivant un schéma de base se répétant périodiquement, pour la mise en oeuvre du procédé selon la revendication 1, caractérisé en ce que le dispositif de régulation (1, 8, 9, 14, 15, 16) est conçu en deux étages (16) de telle manière qu'il produise le schéma de base suivant : entre deux premiers mouvements de montée/descente (I), un nombre prescrit (n) de seconds mouvements de montée/descente à faible course (II) de l'électrode-outil (3) par rapport à la pièce (3') est exécuté.

16. Dispositif selon la revendication 15 pour la mise en oeuvre du procédé selon la revendication 12, caractérisé par

a) un dispositif de contrôle de court-circuit (5, 6, 7) qui émet un signal de court-circuit (T) en cas de situation de court-circuit se présentant dans la zone d'érosion et qui est connecté par l'entremise du dispositif de régulation (1, 8, 9, 14, 15, 16) au dispositif de montée/descente (II) de telle manière que ce dernier exécute un mouvement auxiliaire de montée/descente en cas d'apparition d'un signal de court-circuit (T) et

b) un dispositif (10', 10", 20', 20") de détermination de la fréquence de déclenchement des mouvements auxiliaires de montée/descente,

c) leur sortie des signaux est connectée à l'entrée de réglage d'un organe réglant (14) prévu dans le dispositif de régulation (1, 8, 9, 14, 15, 16) pour la modification de l'intervalle de temps prescrit (ES1) séparant les mouvements de montée/descente (I, II).

17. Dispositif selon la revendication 16 pour la mise en oeuvre du procédé selon la revendication 13, caractérisé en ce que le dispositif (10', 10", 20', 20") de détermination de la fréquence des mouvements auxiliaires de montée/descente déclenchés par court-circuit comprend:

un étage de comptage (10') concu pour le comptage des mouvements auxiliaires de montée/descente qui ont eu lieu pendant un premier intervalle de temps prescrit ($D_1$) et un premier circuit à seuil (20') connecté à cet étage et dont la sortie est connectée à une première entrée de l'organe réglant (14) du dispositif de régulation (1, 8, 9, 14, 15, 16) de telle manière que le premier circuit à seuil (20') envoie à la première entrée de l'organe régiant (14) un signal de réglage ($-\triangle ES$) pour provoquer la diminution du premier intervalle de temps prescrit (ES) lorsque le contenu de l'étage de comptage dépasse un premier seuil prescrit.

18. Dispositif selon la revendication 15 ou 16 pour la mise en oeuvre du procédé selon la revendication 14, caractérisé en ce que le dispositif (10, 10", 20', 20") de détermination de la fréquence des mouvements auxiliaires de montée/descente déclenchés par court-circuit comprend :

un second étage de comptage (10") conçu pour le comptage des mouvements auxiliaires de montée/descente qui ont eu lieu pendant des seconds intervalles prescrits de temps ($D_2$) ainsi qu'un second circuit à seuil (20") connecté à cet étage et dont la sortie est connectée à une seconde entrée de l'organe réglant (14) du dispositif de régulation (1, 8, 9, 14, 15, 16) de telle manière que le second circuit à seuil (20") envoie à la seconde entrée de l'organe réglant (14) un signal de réglage ($+ \triangle ES$) lorsque le contenu de l'étage de comptage n'atteint pas un second seuil prescrit.

**19.** Dispositif selon l'une des revendications 15 à 18 pour la mise en oeuvre du procédé selon l'une des revendications 8 à 14, caractérisé en ce que le dispositif de régulation (1, 8, 9, 14, 15, 16) comprend un organe réglant (22) destiné au réglage de la hauteur de course (H) des premiers mouvements de montée/descente (I) et un dispositif (23) de détermination de la profondeur de pénétration (d) de l'électrode-outil (3) dans la pièce (3'), la sortie des signaux du dispositif de détermination de la profondeur de pénétration (23) étant connectée à l'entrée de l'organe (22) de réglage de la hauteur de course.

Fig. 1

*Fig. 2*

EP 0 272 640 B1

Fig. 3